# FASCICULE DE BREVET EUROPEEN

(11) **EP 2 748 025 B1**
(45) Date de publication et mention de la délivrance du brevet: **14.10.2015**
(21) Numéro de dépôt: 12766289.8
(22) Date de dépôt: 23.08.2012
(51) Int. Cl.: B60K 15/035, B60K 15/03, F02M 25/08, F02D 41/00, F02D 41/02, B60K 6/22

(54) **METHODE DE CONTROLE DE LA PRESSION D'UN SYSTEME A CARBURANT DE VEHICULE HYBRIDE**
VERFAHREN ZUR STEUERUNG DES DRUCKS EINES BRENNSTOFFSYSTEMS EINES HYBRIDFAHRZEUGS
METHOD FOR CONTROLLING THE PRESSURE OF THE FUEL SYSTEM OF A HYBRID VEHICLE

(30) Priorité: 25.08.2011 EP 11178877
(43) Date de publication de la demande: 02.07.2014
(73) Titulaire: Inergy Automotive Systems Research (Société Anonyme), 1120 Brussels (BE)
(72) Inventeur: CRIEL, Bjorn, B-1750 Sint-Martens-Lennik (BE); BERARD, Jean-François, F-92100 Boulogne Billancourt (FR)
(74) Mandataire: Remy, Vincent Noel Paul
(86) Numéro de dépôt international: PCT/EP2012/066384
(87) Numéro de publication internationale: WO 2013/026895

(56) Documents cités:
- WO-A1-2009/103404
- WO-A1-2010/094369
- WO-A1-2011/094704
- US-A- 5 601 065
- US-A1- 2003 098 062
- US-A1- 2007 012 298
- US-A1- 2008 302 341
- US-A1- 2011 166 765

## Description

La présente invention concerne une méthode de contrôle de la pression d'un système à carburant de véhicule hybride.

On parle généralement de véhicule hybride dans le cas d'un véhicule associant l'utilisation d'un moteur thermique et d'un moteur électrique.

Il existe un principe général de fonctionnement pour les véhicules hybrides qui consiste à faire fonctionner soit le moteur électrique, soit le moteur thermique, soit les deux en même temps selon les modèles.

Un des principes particuliers est le suivant:
- lors des phases stationnaires (où le véhicule est immobile), les deux moteurs sont à l'arrêt;
- au démarrage, c'est le moteur électrique qui assure la mise en mouvement de la voiture, jusqu'à des vitesses plus élevées (25 ou 30 km/h);
- lorsque des vitesses plus élevées sont atteintes, le moteur thermique prend le relais;
- en cas de grande accélération, on observe la mise en marche des deux moteurs à la fois, qui permet d'avoir des accélérations équivalentes au moteur de même puissance, voire supérieures;
- en phase de décélération et de freinage, l'énergie cinétique est utilisée pour recharger les batteries (à noter que cette fonctionnalité n'est pas disponible sur tous les moteurs hybrides disponibles sur le marché à l'heure actuelle).

Il résulte de ce principe que le moteur thermique ne fonctionne pas en permanence et que dès lors, les phases de purge du canister (filtre à charbon actif qui évite de relarguer à l'atmosphère, des vapeurs de carburant) ne peuvent pas être assurées normalement puisque lors de celles-ci, de l'air éventuellement préchauffé est mis à circuler dans le canister pour le régénérer (c.à.d. pour désorber les vapeurs de carburant qui y sont adsorbées), cet air étant ensuite admis dans le moteur pour y être brûlé.

Dès lors, pour éviter de charger le canister inutilement, on bloque généralement par défaut la communication entre le réservoir et celui-ci ; il en résulte que les réservoirs à carburant de ces véhicules sont généralement mis sous pression (typiquement, à une pression de l'ordre de 300 - 400 mbar), ce qui se fait généralement par un élément fonctionnel situé après les clapets de ventilation, souvent appelé FTIV (Fuel Tank Isolation Valve) et qui empêche la ventilation (dégazage) du réservoir en dehors des situations de remplissage. Cet élément comprend généralement deux soupapes de sécurité (calibrées aux pressions maximales inférieure et supérieure d'utilisation du réservoir) et un pilotage généralement électrique pour pouvoir mettre à pression atmosphérique le réservoir avant remplissage.

On connaît par exemple du document WO2010/094369 une méthode de contrôle de la pression d'un système à carburant de véhicule équipé d'un moteur thermique alimenté par un carburant stocké dans un réservoir, selon laquelle lorsque le véhicule est garé, on relâche totalement la pression dans le réservoir à carburant.

On connaît également du document US5601065A, une méthode de gestion du remplissage en carburant d'un véhicule à moteur thermique pour éviter que des vapeurs d'essence ne s'échappent, le but étant de maintenir une pression élevée dans le réservoir lors de cette opération, de façon à diriger les vapeurs vers le canister. Selon cette méthode, on peut connecter le canister à l'atmosphère lorsque la pression dans le réservoir est supérieure à la pression atmosphérique.

Par rapport à leurs homologues métalliques, les réservoirs (ou autres parties des systèmes à carburant) en matière plastique présentent un avantage certain en termes de poids et de facilité de mise en oeuvre. Ils pourraient toutefois poser des problèmes en étant soumis à une pression/un vide en deçà des valeurs « seuil » susmentionnées, lorsqu'elles y sont soumises pour une durée prolongée. On pourrait ainsi assister à une fissuration sous contrainte qui pourrait être aggravée par l'exposition au carburant, la température...

On peut distinguer plusieurs types de fissuration:
- Celle de la peau du réservoir
- Celle des éléments de renforcement ajoutés dans le réservoir pour limiter ces déformation pendant les périodes ou on a une surpression/dépression interne
- Celle d'un autre élément du système.

La présente invention vise à résoudre ce problème en proposant une stratégie/méthode de contrôle d'un système à carburant de véhicule hybride qui permet d'utiliser des pièces en matière plastique avec une sécurité accrue.

Elle est basée sur l'idée de relâcher ponctuellement la pression dans un réservoir à carburant (RàC) en dehors des situations de remplissage afin de soulager la matière plastique. La demanderesse a en effet constaté qu'une telle dépressurisation ponctuelle, même totale, ne chargeait finalement que très peu le canister, typiquement : seulement de l'ordre de 20% comparé à une situation de remplissage.

La présente invention concerne dès lors une méthode de contrôle conforme à la revendication 1.

Le carburant auquel est destinée l'invention peut être de l'essence, du diesel, un biocarburant...et peut avoir une teneur en alcool de 0 à 100%.

Dans le présent mémoire, le système à carburant est un assemblage d'éléments qui sont destinés au moteur thermique un véhicule hybride. Ces éléments comprennent généralement des dispositifs liés au stockage du carburant (réservoir, dispositif de ventilation, canister...) et à son alimentation au moteur.

Les éléments du système à carburant selon l'invention sont en une matière compatible avec chacun des hydrocarbures liquides qu'il est susceptible de traiter. Cette matière doit être inerte chimiquement à la fois vis-à-vis des hydrocarbures liquides volatils et des hydrocarbures liquides lourds aux pressions et aux températures habituelles d'utilisation. Elle peut être une matière plastique ou un métal. Les éléments du système selon l'invention peuvent également être mixtes, c.à.d. comprendre des pièces en métal et des pièces en matière plastique. Selon l'invention, au moins le réservoir à carburant est en matière plastique c.à.d. comprend une enceinte en matière plastique définissant un volume de stockage. Cette enceinte est de préférence renforcée, par exemple par un renfort fibreux interne ou externe, par des soudures locales («kiss points»), par un élément renforçant rapporté (sorte de pilier) solidarisant ses parois inférieure et supérieure...

Les matières thermoplastiques donnent de bons résultats dans le cadre de l'invention, notamment en raison des avantages de poids, de résistance mécanique et chimique et de mise en oeuvre facilitée, en particulier lorsque les éléments du système présentent des formes complexes.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé pour les réservoirs à carburant est le polyéthylène. D'excellents résultats ont été obtenus avec du polyéthylène haute densité (PEHD).

De préférence, le réservoir auquel est destinée la méthode selon l'invention présente une structure multicouche comprenant au moins une couche de matière thermoplastique et au moins une couche supplémentaire qui peut, de manière avantageuse, être constituée d'un matériau barrière aux liquides et/ou aux gaz.

La présente invention s'applique bien dans le cas de réservoirs à carburant en PEHD ayant une couche barrière en EVOH.

La méthode selon l'invention vise à éviter de mettre le réservoir sous pression pendant une durée prolongée lorsque le moteur thermique est à l'arrêt c.à.d. généralement lorsque le véhicule fonctionne en mode électrique ou lorsque le véhicule est garé.

Pour ce faire, la méthode selon l'invention prévoit de relâcher totalement ou partiellement la pression dans le réservoir à carburant après une durée de sécurité donnée.

Généralement, ce relâchement de pression est opéré grâce à un dispositif de ventilation. Par «dispositif de ventilation», on entend désigner un ou plusieurs éléments creux connectés entre eux et susceptible d'être inséré(s) dans un circuit de ventilation d'un système à carburant et d'être traversé(s) par des vapeurs de carburant allant généralement du réservoir vers un canister. Ce dispositif est généralement un clapet. De préférence, ce clapet est une FTIV telle que décrite ci-dessus.

Par «canister», on entend généralement désigner une enceinte contenant une substance adsorbant les vapeurs de carburant, usuellement du charbon actif Le rôle du canister est d'éviter la libération de vapeurs de carburant dans l'atmosphère. Cette enceinte comprend une entrée, par où les vapeurs issues du réservoir à carburant pénètrent, et une sortie, par laquelle l'air épuré en vapeurs de carburant, peut sortir. A noter que lorsque le réservoir est en dépression, de l'air en provenance de l'atmosphère circule de la sortie du canister vers son entrée.

Le terme «connecté» utilisé ci-dessus désigne généralement être directement fixé sur ou être relié par une ligne de connexion. Généralement, la connexion se fait par une ligne.

La méthode selon l'invention est généralement appliquée au système à carburant par un processeur qui peut être intégré à l'ordinateur de bord du véhicule (parfois appelé ECU ou Engine Control Unit), ou par un processeur spécifique au système à carburant (parfois appelé FSCU ou Fuel System Control Unit).

Selon cette variante de l'invention, soit la durée de sécurité est fixe, et stockée dans une mémoire de l'ECU et/ou du FSCU, soit elle est définie (déduite) par ce dernier en fonction de valeurs lues par des capteurs, par exemple de pression et/ou de température. Cette dernière variante est préférée. En particulier, la durée de sécurité peut être définie par le processeur selon une valeur de température lue par un capteur. Typiquement, cette durée peut être infinie lorsque la température est inférieure à une valeur seuil (50°C par exemple), comprise typiquement entre 50 et 1000h lorsque la température est comprise entre 50 et 60°C et comprise typiquement entre 0 et 100h lorsque la température dépasse 60°C.

Selon l'invention, au bout de la durée de sécurité, la pression est soit relâchée entièrement (le réservoir étant alors mis à pression atmosphérique), soit elle est abaissée en deçà d'une valeur prédéterminée. En d'autres termes : elle est abaissée à une pression seuil qui peut être la pression atmosphérique ou une pression positive donnée.

Cette pression seuil est calculée sur la base d'une accumulation de la contrainte dans les éléments du système. Cette accumulation est exprimée sur la base d'un paramètre d'accumulation intégrant les données suivantes:
- la température
- la durée d'exposition
- le niveau de contrainte dans les éléments de renforcement, qui a un lien direct avec la pression interne dans le réservoir (paramètre qui peut être mesuré par un capteur de pression) et dont le lien avec la contrainte pourrait être déterminé au travers de tables stockées dans un processeur tel que décrit ci-dessus.

Le paramètre d'accumulation pourrait être appliquée sur:
- la peau du réservoir (dont la forme peut varier)
- les éléments de renforcement dans le réservoir
- les éventuels autres éléments en matière plastique mis sous pression (lignes de ventilation, canister, ....)
étant entendu que la valeur finale de la pression seuil tiendra de préférence compte des paramètres d'accumulation de contrainte de tous les éléments du système (peau, renfort ou autre élément).

Une accumulation de contraintes peut, par exemple, se produire lorsque le véhicule roule dans un endroit chaud, tel que par exemple la Vallée de la mort (ou Death Valley) aux Etats-Unis. En supposant que les opérations de remplissage du réservoir à carburant ont été effectuées le matin et que le véhicule roule dans la Vallée de la mort en milieu de journée, au moment où la température est très élevée (par exemple, supérieure à 50°C), la pression interne dans le réservoir peut atteindre rapidement un niveau de pression maximum autorisé. La pression interne dans le réservoir peut rester à ce niveau maximum autorisé (ou éventuellement à un niveau supérieur) pendant une durée prolongée. Ainsi, pour éviter tout risque de fissuration des éléments du système à carburant, et notamment des éléments du réservoir, on relâche totalement ou partiellement la pression dans le réservoir, par exemple, après une heure de roulage au niveau de pression maximum autorisé (ou à un niveau supérieur). Le roulage peut se faire en utilisant le moteur thermique ou le moteur électrique.

## Revendications

1. Méthode de contrôle de la pression d'un système à carburant de véhicule hybride équipé d'un moteur thermique alimenté par un carburant stocké dans un réservoir en matière plastique, et d'un moteur électrique, selon laquelle, lorsque le moteur thermique est à l'arrêt, on relâche totalement ou partiellement la pression dans le réservoir à carburant après une durée de sécurité donnée et en fonction d'au moins un paramètre d'accumulation de contrainte, chaque paramètre d'accumulation de contrainte étant associé à un élément du système à carburant et étant défini par une information de température, une information relative à une durée d'exposition et une information relative à un niveau de contrainte sur ledit élément.

2. Méthode selon la revendication précédente, dans laquelle le réservoir comprend une enceinte en matière plastique définissant un volume de stockage, cette enceinte étant renforcée, par exemple par un renfort fibreux interne ou externe, par des soudures locales, par un élément renforçant rapporté solidarisant ses parois inférieure et supérieure.

3. Méthode selon l'une quelconque des revendications précédentes, dans laquelle le réservoir est en PEHD ou polyéthylène haute densité et comprend une couche barrière en EVOH ou copolymère éthylène-alcool vinylique.

4. Méthode selon l'une quelconque des revendications précédentes, dans laquelle le relâchement de pression est opéré grâce à un clapet.

5. Méthode selon la revendication précédente, dans laquelle le clapet est une FTIV ou «Fuel Tank Isolation Valve».

6. Méthode selon l'une quelconque des revendications précédentes, ladite méthode étant appliquée au système à carburant par un processeur qui peut être intégré à l'ordinateur de bord du véhicule, ou par un processeur spécifique au système à carburant.

7. Méthode selon la revendication précédente, dans laquelle la durée de sécurité est définie par le processeur selon une valeur de température lue par un capteur.

## Patentansprüche

1. Verfahren zur Steuerung des Drucks eines Kraftstoffsystems eines Hybridfahrzeugs, das mit einem Verbrennungsmotor, der durch einen Kraftstoff versorgt wird, der in einem Tank aus Kunststoff bevorratet wird, und mit einem Elektromotor versehen ist, bei dem, wenn der Verbrennungsmotor stillsteht, der Druck in dem Kraftstofftank nach einem bestimmten Sicherheitszeitraum und in Abhängigkeit wenigstens eines Belastungsaufbauparameters vollständig oder teilweise abgelassen wird, wobei jeder Belastungsaufbauparameter einem Element des Kraftstoffsystems zugeordnet ist und durch eine Temperaturinformation, eine Information über einen Expositionszeitraum und eine Information über einen Pegel der Belastung dieses Elements definiert ist.

2. Verfahren nach dem vorhergehenden Anspruch, bei dem der Tank eine Umschließung aus Kunststoff umfasst, die ein Bevorratungsvolumen festlegt, wobei diese Umschließung verstärkt ist, zum Beispiel durch eine interne oder externe Faserverstärkung, durch lokale Schweißnähte, durch ein angebrachtes Verstärkungselement, das dessen untere und obere Wand fest verbindet.

3. Verfahren nach einem der vorhergehenden Ansprüche, bei dem der Tank aus PEHD oder Polyethylen hoher Dichte ist und eine Sperrschicht aus EVOH oder Ethylen-Vinylalkohol-Copolymer enthält.

4. Verfahren nach einem der vorhergehenden Ansprüche, bei dem das Ablassen des Drucks mit Hilfe einer Ventilklappe erfolgt.

5. Verfahren nach dem vorhergehenden Anspruch, bei dem die Ventilklappe ein FTIV oder ein "Kraftstofftank-Isolier-Ventil" ist.

6. Verfahren nach einem der vorhergehenden Ansprüche, wobei das Verfahren auf das Kraftstoffsystem durch einen Prozessor, der in den Bordcomputer des Fahrzeugs integriert sein kann, oder durch einen für das Kraftstoffsystem spezifischen Prozessor angewendet wird.

7. Verfahren nach dem vorhergehenden Anspruch, bei dem der Sicherheitszeitraum durch den Prozessor entsprechend einem Temperaturwert, der von einem Geber ermittelt wird, definiert wird.

## Claims

1. A method of controlling the pressure of a fuel system of a hybrid vehicle having both an engine fed with fuel stored in a tank made of plastics material and an electric motor, in which method, when the engine is stopped, the pressure inside the fuel tank is relaxed in full or in part after a given safety duration and as a function of at least one stress accumulation parameter, each stress accumulation parameter being associated with an element of the fuel system and being defined by information concerning temperature, information concerning duration of exposure, and information concerning a level of stress on said element.

2. A method according to the preceding claim, wherein the tank comprises an enclosure made of plastics material defining a storage volume, said enclosure being reinforced, e.g. by internal or external fiber reinforcement, by local bonds, by a fitted reinforcing element connected together its bottom and top walls.

3. A method according to either preceding claim, wherein the tank is made of high density polyethylene (HDPE) and includes a barrier layer made of ethylene-vinyl-alcohol copolymer (EVOH).

4. A method according to any preceding claim, wherein pressure is relaxed by means of a valve.

5. A method according to the preceding claim, wherein the valve is a fuel tank isolation valve (FTIV).

6. A method according to any preceding claim, said method being applied to the fuel system by a processor that may be incorporated in the on-board computer of the vehicle or by a processor that is specific to the fuel system.

7. A method according to the preceding claim, wherein the safety duration is defined by the processor depending on a temperature value as read by a sensor.
